# EUROPEAN PATENT SPECIFICATION

(11) **EP 3 689 126 B1**
(45) Date of publication and mention of the grant of the patent: **08.12.2021**
(21) Application number: 20154299.0
(22) Date of filing: 29.01.2020
(51) Int. Cl.: A01D 45/00, A23N 12/02, B07C 5/342

(54) **OPTOELECTRONIC SORTING DEVICE**
OPTOELEKTRONISCHE SORTIERUNGSVORRICHTUNG
APPAREIL OPTOÉLECTRONIQUE DE TRIAGE

(30) Priority: 30.01.2019 IT 201900001355
(43) Date of publication of application: 05.08.2020
(73) Proprietor: Guaresi S.p.A., 44010 Bondeno (FE) (IT)
(72) Inventor: Guaresi, Massimiliano, 44010 Bondeno (FE) (IT)
(74) Representative: Fisauli, Beatrice A. M.

(56) References cited:
- FR-A1- 2 261 075
- GB-A- 2 377 019
- NL-A- 7 702 465
- US-A- 5 279 426

## Description

The present invention refers, in general, to an optoelectronic sorting machine. More particularly, the present invention refers to an optoelectronic sorting machine to be mounted on a fruit and vegetable harvesting machine for vegetables such as tomatoes, peppers and so on, as well as fruits such as apples, etc.

Hereinafter, for brevity, the description refers mainly to vegetables but it is to be intended, in general, with reference to fruit and vegetable products unless otherwise stated.

According to the prior art, the optoelectronic sorting machines applied, for example, to industrial tomato harvesting machines, have the task of expelling, from the flow of the collected product, the non-compliant berries, mainly fruits that have not reached the correct maturity, as well as any foreign bodies, such as clods of earth, rocks and stones that may have been loaded by the harvesting machine.

The document NL 7702465 discloses an optoelectronic sorting machine for vegetable harvesting machine according to the preamble of claim 1.

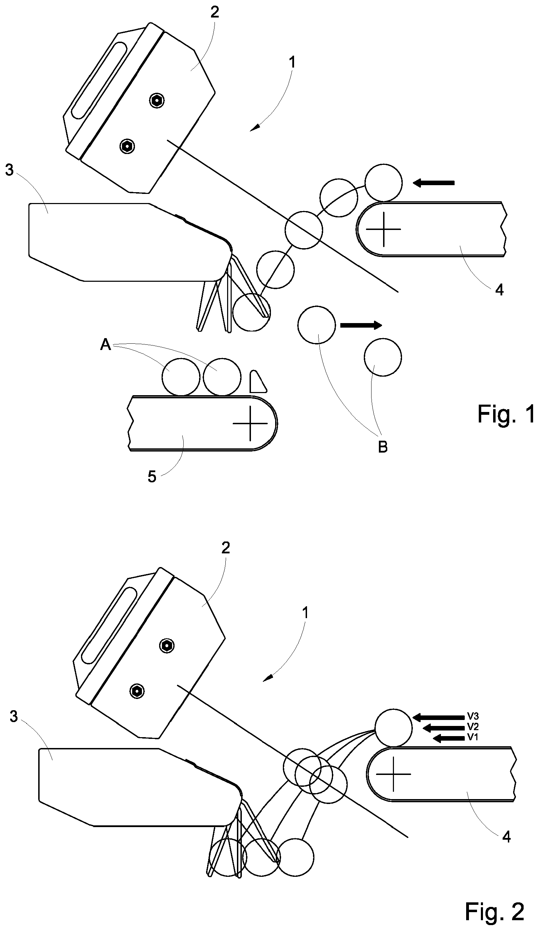

As shown in Figures 1 and 2, an optoelectronic sorting machine 1 according to the prior art includes, in general, a recognition group 2, which is adapted to recognize the objects to be expelled, and an ejection device 3, which is adapted to expel the objects identified previously.

The product to be selected by means of an optoelectronic sorting machine 1 is conveyed by a first conveyor belt 4 to a second conveyor belt 5 collecting the compliant product.

The product to be selected falls from the first conveyor belt 4 to the second conveyor belt 5. During this fall, the product B to be expelled, suitably identified by the recognition group 2, is hit and deflected by the flow of the compliant product A.

More precisely, the recognition group includes the optoelectronic components used to examine the flow of the product and to identify which objects must be expelled.

In some cases, there may be two opposing recognition groups so as to view both sides of the product, but the consequent encumbrance makes the installation of the mobile machines difficult.

Once the object to be removed has been identified, removal is commanded to the ejection device that is positioned under the recognition group.

The ejection device physically deals with the elimination of the waste material and includes actuators which are connected to vanes which hit the chosen object so that the object in question is deviated from the flow of the collected product while it is falling between the first conveyor belt and the second conveyor belt.

In the case of very small or light products such as rice, the removal can take place through an air flow.

In order to obtain a good functioning, the operator who intervenes in the regulation of these machines has to set parameters in the sorting machine so as to properly eliminate the unwanted objects and has also to adjust the speed of the conveyor belt according to the quantity of collected product, depending on the speed of advance of the machine and the quantity of product in the field per unit area.

At the same time, the speed of the conveyor belt must remain in the proper speed range so as to allow a correct identification and ejection.

As shown in Fig. 2, the variation of the speed of the conveyor belt involves different trajectories of fall of the product to be selected so as to adapt to the different productivity of the field and the harvesting speed of the machine.

Consequently, the ejection device must be moved manually to maintain the correct distance between the vanes and the trajectory of the material.

Indeed, in the absence of such an adjustment, in case the product is superabundant with respect to the adjustment of position of the ejection group, tomatoes can get in touch with the device itself and bounce, leaving the compliant product flow and thus increasing the losses of product that would not to be rejected.

On the contrary, in case the product arrives too far from the ejection group, the stroke of the vanes may not be sufficient and a part of the product to be rejected can remain in the flow of material that is then transferred to the processing industry.

The adjustments of the speed of the conveyor belt and the position of the ejection group are performed occasionally while in the field, the conditions can vary also consistently with a certain rapidity.

There is therefore a tendency to make medium adjustments and not to make the best use of the capabilities of the machine.

In this way, the performance of the machine is not exploited to the full. At the end of the selection, the product may include material that should have been rejected and at the same time, compliant product may have been rejected.

In addition, also a recognition group 2 can be too far or too near the product to be recognized according o the trajectory of the falling material, as it can be seen in Figure 2.

Said positions are not ideal for optimal product recognition.

Object and function of the present invention is to provide an optoelectronic sorting machine for vegetable harvesting machines, which can expel most, if not all, of the product to be actually rejected and at the same time, does not expel compliant product.

Another object of the invention is to provide an optoelectronic sorting machine that, regardless of the speed of the conveyor belt conveying the material to be selected, carries out the selection activity and the possible activity of expulsion of the non-compliant product automatically, without the intervention of an operator.

A further object of the invention is to provide an optoelectronic sorting machine in which the ejection device and/or the recognition group are always in an optimal position regardless of the speed of the first conveyor belt carrying the material to be selected.

The aforesaid objects and still others are achieved with an optoelectronic sorting machine for harvesting machines for fruit and vegetable harvesting products, comprising:
- a first conveyor belt from which objects to be selected, including fruits and vegetables, come and is adapted to be moved at a speed which can be set through speed control means;
- a second conveyor belt to which the selected fruits and vegetables arrive;
- a recognition group adapted to recognize objects to be expelled among all the objects passing from the first conveyor belt to the second conveyor belt;
- an ejection device adapted to eject the objects which have been previously identified and selected by the recognition group.

In particular, the optoelectronic sorting machine is characterized by the fact that the recognition group includes recognition means suitable for identifying the filling level of the first conveyor belt, so as to vary the speed of the first conveyor belt through speed control means, in order that the measured filling level is equal to an ideal filling level set previously.

The optoelectronic sorting machine according to the invention therefore makes it possible to better exploit the production capacity of the vegetable harvesting machine that constantly adapts to the harvesting conditions, i.e. the speed of advance of the machine and the quantity of product per unit area.

In the optoelectronic sorting machine according to the invention, it is provided that the recognition means may determine the quantity of vegetables leaving the first conveyor belt so as to compare that value with a reference quantity value previously set and vary the speed of the first conveyor belt in order to reach the aforesaid reference value, so that the harvesting machine works at maximum efficiency.

In order to determine the filling level of the first conveyor belt even more precisely, the recognition means may also determine the size of the vegetables.

Alternatively to the measurement of quantity and dimensions, the recognition means may define the ratio between full spaces and empty spaces of the articles leaving the first conveyor belt so as to compare that ratio with a reference ratio previously set and vary the speed of the first conveyor belt in order to maximize the efficiency of the harvesting machine.

Advantageously, the optoelectronic sorting machine according to the invention may include first moving means to move the ejection device, for example a track on which the ejection device can be translated to vary the position of the ejection device itself according to the speed of the first conveyor belt and the exit trajectory of the vegetables from the first conveyor belt.

Besides, second moving means may be comprised to move the recognition group, for example also in this case, a track on which the recognition group can be translated so as to vary the position of the recognition group itself according to the speed of the first conveyor belt, the size of the vegetables and the exit trajectory of the vegetables from the first conveyor belt.

Through these moving means, it is possible to put the ejection device and/or the recognition group in the best position so as to make these devices work in the ideal position.

In this way, it is possible to obtain less loss of compliant product and less quantity of non-compliant material in the vegetable flow, for instance tomato, sent to the processing industry.

Besides, it is not necessary the intervention of a competent operator for the adjustments of the speed of the first conveyor belt as well as the position of the ejection device and the recognition group.

The objects and advantages of the invention are also achieved by a process for setting the correct speed of a first conveyor belt of an optoelectronic sorting machine for vegetable harvesting machines, as previously defined.

The process is characterized by the fact of comprising the following steps:
- determining the current filling level of the first conveyor belt;
- comparing the current filling level of the first conveyor belt with the ideal filling level for an effective operation of the harvesting machine;
- if the measured filling level is lower than the ideal filling level, decreasing the speed of the first conveyor belt; or
- if the measured filling level is higher than the ideal filling level, increasing the speed of the first conveyor belt.

Advantageously, the filling level of the first conveyor belt may be measured by the recognition group which determines the quantity of vegetables coming out of the first conveyor belt and the quantity of vegetables on the first conveyor belt is compared with an ideal quantity set previously.

Alternatively, the filling level of the first conveyor belt may be measured by a recognition group which determines the ratio between full spaces and empty spaces on the first conveyor belt and compares the measured ratio with an ideal ratio set previously.

Advantageously, the position of an ejection device to expel non-compliant objects and/or the position of the recognition group may be modified automatically depending on the speed of the first conveyor belt and therefore, on the exit speed of the vegetables from the first conveyor belt as well as on the average size of the vegetables to be recognized.

Further features and details of the invention will be better understood from the following specification, provided by way of a non-limiting example, as well as from the annexed drawing, wherein:
Fig. 1 is a schematic side view of an optoelectronic sorting machine according to the prior art ;
Fig. 2 is a schematic side view of the optoelectronic sorting machine in Fig. 1, in which the conveyor belt conveying the product to be selected is moved with three different speeds;
Fig. 3 is a schematic side view of an optoelectronic sorting machine according to the invention;
Figs 4 and 5 are schematic side views of the optoelectronic sorting machine in Fig. 3, arranged in automatic according two different configurations depending on the speed of the conveyor belt conveying the product to be selected.

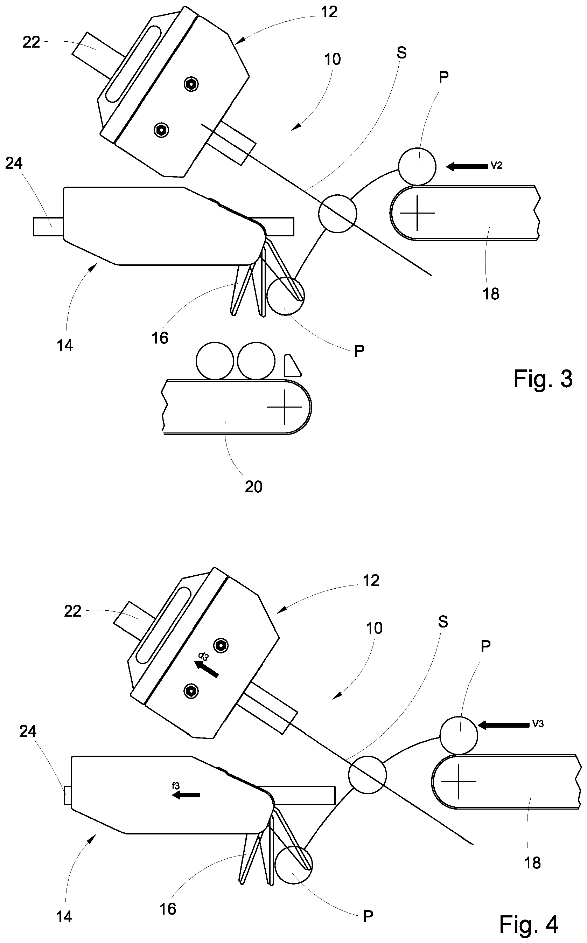

With reference to the annexed drawing, in particular to Figures 3, 4 and 5, reference number 10 denotes an optoelectronic sorting machine for the selection of objects such as vegetables, for example tomatoes, peppers and others, denoted in the figures with the reference letter P.

The optoelectronic selecting machine 10 includes a recognition group 12, adapted to recognize the objects to be expelled, and an ejection device 14, adapted to exclude objects, identified previously, by means of vanes 16 that are moved by actuators according to the prior art.

The objects to be selected pass from a first conveyor belt 18 to a second conveyor belt 20 collecting compliant product.

The recognition group 12 is mounted on a first track 22 so as to be translated according to a direction S coinciding with the viewing direction of the objects for the viewing by the recognition group 12 itself.

The ejection device 14 is mounted on a second track 24 so as to be translated horizontally.

The recognition group 12 and the ejection device 14 are translated forward or backward with respect to the position in Figure 3 depending on the speed of the first conveyor belt and also the average size of the vegetable.

In particular, as shown in Figure 4, the recognition group 12 and the ejection device 14 are translated backward with respect to the fall trajectory of the objects because the speed v3 of the conveyor belt 18 is greater than the speed v2 of the conveyor belt 18 shown in Figure 3.

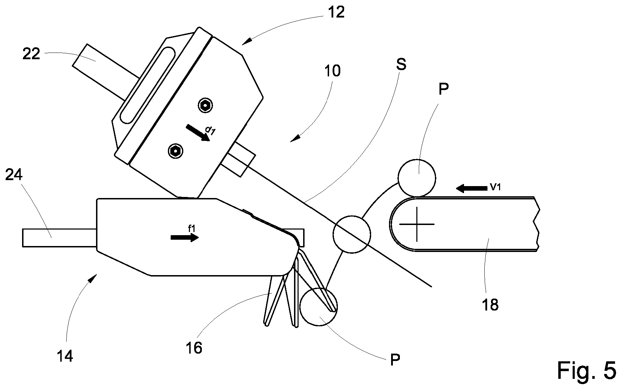

In the same way, as shown in Figure 5, the recognition group 12 and the ejection device 14 are translated forward with respect to the fall trajectory of the objects because the speed v1 of the conveyor belt 18 is lower than the speed v2 of the conveyor belt 18 shown in Figure 3.

Moreover, in the optoelectronic sorting machine 10 according to the invention it is provided that the speed regulation of the conveyor belt takes place automatically according to the quantity of product collected in order to keep the conveyor belt sufficiently full so that the vegetables stabilize each other.

The recognition group 12 includes recognition means identifying the quantity and size of vegetables passing from the first conveyor belt 18 to the second conveyor belt 20.

In some cases, the aforesaid recognition means help the correct identification of vegetables and therefore their subsequent expulsion by the recognition group 12, as in the case of spherical vegetables, such as tomatoes, which would tend to roll losing speed and directionality and thus making these operations difficult.

At the same time, the first conveyor belt 18 must not be too full so as not to have objects P superimposed on several layers. This arrangement would make difficult for the recognition group 12 to make a correct identification and would therefore involve subsequent undesired expulsions of compliant product.

Once the speed of the conveyor belt has been regulated automatically, the position of the ejection device and, in case, also the position of the recognition group 12, is adjusted automatically on the first track 22 and the second track 24, respectively, by means of a linear actuator or other equivalent devices such as an endless screw with rotary motor, racks or other solutions.

The speed of the first conveyor belt 18, which typically is moved by hydraulic motors, is regulated by means of a flow regulating solenoid valve.

The speed of the first conveyor belt 18, equipped with a sensor that identifies its speed, is regulated by the recognition group 12 itself.

In fact, optics present in the recognition group 12 are capable to detect the quantity and size of passing objects.

Depending on these data collected by the recognition group 12, it is possible to obtain the correct speed to have the first conveyor belt 18 full enough, without causing an overlap of the objects P conveyed.

In fact, control and adjusting means compare the quantity of vegetables coming from the first conveyor belt and measured by the recognition group 12 with the reference quantity set previously for an effective operation of the harvesting machine.

If the measured quantity is less than the reference quantity, the control and adjusting means decrease the speed of the first conveyor belt 18. On the contrary, if the measured quantity is greater than the reference quantity, the control and adjusting means increase the speed of the first conveyor belt 18.

If the speed of advance of the first conveyor belt 18 is known, it is then possible to identify the trajectory of the falling object, by composing the uniform horizontal motion with the uniformly accelerated motion typical of falling bodies.

In this way, the best position of the ejection device 14 and recognition group 12 is identified and is therefore physically achieved.

In order to achieve a greater precision in the activity of recognition and ejection it is optimal to adjust the position of the ejection device 14 and the recognition group 12 also according to the average size of the object.

In fact, as shown in Figure 3, the output speed from the first conveyor belt 18 is v2; the recognition group 12 and the ejection device 14 are arranged in the most correct position to recognize each object leaving the first conveyor belt 18 and to hit it if it is not compliant.

As shown in Figure 4, in case the speed is increased from v2 to v3, the recognition group 12 and the ejection device 14 are translated, and precisely moved away from the recognition point, on the respective tracks 22, 24 at a distance of d3 and f3, respectively.

In a corresponding manner, as shown in Figure 5, in case the speed is decreased from v2 to v1, the recognition group 12 and the ejection device 14 are translated, and precisely approached to the recognition point, on the respective tracks 22, 24 at a distance of d1 and f1, respectively.

According to a variant of the invention, the optimal speed of the first conveyor belt 18 is defined by calculating an optimum ratio of full spaces and empty spaces.

The recognition group 12 detects the objects passing before and calculates the ratio between the measured values of full spaces and the measured values of empty spaces. By increasing or decreasing the speed of the first conveyor belt 18, it is possible to obtain the optimum and therefore desired ratio between full spaces and empty spaces.

In fact, a first too slow conveyor belt 18 will amass the product and consequently the ratio between full spaces and empty spaces will be too high while a too high speed will space out the objects making the ratio between full spaces and empty spaces too low.

Thus, the machine sets the correct speed of the conveyor belt and according to this speed and the average size, the ejection device 14 and the recognition group 12 are translated and arranged in the correct position.

Further variants are possible which are to be considered as included in the scope of protection, for example it is possible that the automatic regulation of the position is done only for the ejection device.

Moreover, the displacement of the recognition group and ejection device can take place on two respective tracks, as previously described, but the displacement can take place also alternately through different means such as lever systems, actuators, racks, or other devices.

Furthermore, the displacement of the recognition group can be different from the aforesaid displacement, for example this displacement can be a movement coinciding with the viewing direction of the recognition group itself. For example, this displacement can be a simple horizontal translation or a displacement with angle variation so as to make the vision both at the correct distance and also perpendicular to the tangent to trajectory of the vegetable, for example tomato.

The invention has been described with reference to a case in which the optoelectronic sorting machine 10 is mounted on tomato harvesting machines, but the optoelectronic sorting machine can be placed even on agricultural fruit and vegetable machines, for example for the harvesting of peppers, onions, potatoes and so on.

## Claims

1. Optoelectronic sorting machine (10) for fruit and vegetable harvesting machines comprising:
- a first conveyor belt (18) from which objects to be selected, including fruits and vegetables, come and is adapted to be moved at a speed which can be set through speed control means;
- a second conveyor belt (20) to which the selected fruits and vegetables arrive;
- a recognition group (12) adapted to recognize objects to be expelled among all the objects passing from the first conveyor belt (18) to the second conveyor belt (20);
- an ejection device (14) adapted to eject the objects which have been previously identified and selected by the recognition group (12);
**characterized by** the fact that the recognition group (12) includes recognition means suitable for identifying the filling level of the first conveyor belt (18), so as to vary the speed of the first conveyor belt (18) through speed control means, in order that the measured filling level is equal to an ideal filling level set previously.

2. Optoelectronic sorting machine (10) according to the preceding claim, wherein the recognition means determine the quantity of objects leaving the first conveyor belt (18).

3. Optoelectronic sorting machine (10) according to one of the preceding claims, wherein the recognition means determine the size of the objects leaving the first conveyor belt (18).

4. Optoelectronic sorting machine (10) according to claim 1, wherein the recognition means include a calculation device that calculates the ratio between full and empty spaces on the first conveyor belt (18).

5. Optoelectronic sorting machine (10) according to one of the preceding claims, wherein first moving means (24) are comprised to move the ejection device (14).

6. Optoelectronic sorting machine (10) according to one of the preceding claims, wherein second moving means (22) are comprised to move the recognition group (12).

7. Process for setting the correct speed of a first conveyor belt (18) of an optoelectronic sorting machine (10) for fruit and vegetable harvesting machines, **characterized by** the fact of comprising the following steps:
- determining the current filling level of the first conveyor belt (18);
- comparing the current filling level of the first conveyor belt (18) with the ideal filling level for effective operation of the vegetable harvesting machine;
- if the measured filling level is lower than the ideal filling level, decreasing the speed of the first conveyor belt (18);
- if the measured filling level is higher than the ideal filling level, increasing the speed of the first conveyor belt (18).

8. Process according to the preceding claim, wherein the filling level of the first conveyor belt (18) is measured by a recognition group (12) which is adapted to verify the conformity of each object and which determines the quantity of objects coming out of the first conveyor belt (18) and in which the quantity of objects on the first conveyor belt (18) is compared with a reference quantity set previously.

9. Process according to claim 7, wherein the filling level of the first conveyor belt (18) is measured by a recognition group (12) which determines the ratio between full and empty spaces among the objects leaving the first conveyor belt (18) and in which the measured ratio is compared with a reference ratio set previously.

10. Process according to one of claims 7 to 9, wherein first moving means (24) of an ejection device (14) are comprised to expel non-compliant vegetables and/or second moving means (22) of the recognition group (12) are comprised and in which the position of the ejection device (14) and/or the position of the recognition group (12) are modified depending on the speed of the first conveyor belt (18) and therefore, on the exit speed of vegetables from the first conveyor belt (18).

## Patentansprüche

1. Optoelektronische Sortiermaschine (10) für Obst- und Gemüseerntemaschinen, umfassend:
- ein erstes Förderband (18), von dem die auszuwählenden Objekte, einschließlich Obst und Gemüse, kommen und das mit einer Geschwindigkeit bewegt werden kann, die durch Geschwindigkeitssteuerungsmittel eingestellt werden kann;
- ein zweites Förderband (20), zu dem die ausgewählten Früchte und Gemüse gelangen;
- eine Erkennungsgruppe (12), die geeignet ist, die auszustoßenden Gegenstände unter allen Gegenständen zu erkennen, die vom ersten Förderband (18) zum zweiten Förderband (20) gelangen;
- eine Auswurfvorrichtung (14), die geeignet ist, die Objekte auszuwerfen, die zuvor von der Erkennungsgruppe (12) identifiziert und ausgewählt worden sind;
**dadurch gekennzeichnet, dass** die Erkennungsgruppe (12) Erkennungsmittel umfasst, die geeignet sind, den Füllstand des ersten Förderbandes (18) zu identifizieren, um die Geschwindigkeit des ersten Förderbandes (18) durch Mittel zur Geschwindigkeitssteuerung zu verändern, damit der gemessene Füllstand gleich einem vorher eingestellten idealen Füllstand ist.

2. Optoelektronische Sortiermaschine (10) nach dem vorhergehenden Anspruch, wobei die Erkennungsmittel die Menge der das erste Förderband (18) verlassenden Gegenstände bestimmen.

3. Optoelektronische Sortiermaschine (10) nach einem der vorangehenden Ansprüche, wobei die Erkennungsmittel die Größe der das erste Förderband (18) verlassenden Gegenstände bestimmen.

4. Optoelektronische Sortiermaschine (10) nach Anspruch 1, wobei die Erkennungsmittel eine Recheneinrichtung umfassen, die das Verhältnis zwischen vollen und leeren Plätzen auf dem ersten Förderband (18) berechnet.

5. Optoelektronische Sortiermaschine (10) nach einem der vorhergehenden Ansprüche, wobei erste Bewegungsmittel (24) zum Bewegen der Auswurfvorrichtung (14) vorgesehen sind.

6. Optoelektronische Sortiermaschine (10) nach einem der vorhergehenden Ansprüche, bei der zweite Bewegungsmittel (22) zum Bewegen der Erkennungsgruppe (12) vorgesehen sind.

7. Verfahren zur Einstellung der korrekten Geschwindigkeit eines ersten Förderbandes (18) einer optoelektronischen Sortiermaschine (10) für Obst- und Gemüseerntemaschinen, **dadurch gekennzeichnet, dass** es die folgenden Schritte umfasst:
- Ermitteln des aktuellen Füllstandes des ersten Förderbandes (18);
- Vergleichen des aktuellen Füllstandes des ersten Förderbandes (18) mit dem idealen Füllstand für einen effektiven Betrieb der Gemüseerntemaschine;
- wenn der gemessene Füllstand niedriger als der ideale Füllstand ist, Verringern der Geschwindigkeit des ersten Förderbandes (18);
- wenn der gemessene Füllstand höher als der ideale Füllstand ist, Erhöhung der Geschwindigkeit des ersten Förderbandes (18).

8. Verfahren nach dem vorhergehenden Anspruch, bei dem der Füllstand des ersten Förderbandes (18) durch eine Erkennungsgruppe (12) gemessen wird, die geeignet ist, die Konformität jedes Objekts zu überprüfen, und die die Menge der Objekte bestimmt, die aus dem ersten Förderband (18) herauskommen, und bei dem die Menge der Objekte auf dem ersten Förderband (18) mit einer zuvor festgelegten Referenzmenge verglichen wird.

9. Verfahren nach Anspruch 7, bei dem der Füllstand des ersten Förderbandes (18) durch eine Erkennungsgruppe (12) gemessen wird, die das Verhältnis zwischen vollen und leeren Räumen unter den das erste Förderband (18) verlassenden Gegenständen ermittelt und bei dem das gemessene Verhältnis mit einem zuvor eingestellten Referenzverhältnis verglichen wird.

10. Verfahren nach einem der Ansprüche 7 bis 9, bei dem erste Bewegungsmittel (24) einer Auswurfvorrichtung (14) vorgesehen sind, um nicht konformes Gemüse auszustoßen, und/oder zweite Bewegungsmittel (22) der Erkennungsgruppe (12) vorgesehen sind, und bei dem die Position der Auswurfvorrichtung (14) und/oder die Position der Erkennungsgruppe (12) in Abhängigkeit von der Geschwindigkeit des ersten Förderbandes (18) und somit von der Austrittsgeschwindigkeit des Gemüses aus dem ersten Förderband (18) verändert werden.

## Revendications

1. Machine de triage optoélectronique (10) pour machines de récolte de fruits et légumes comprenant :
- une première bande transporteuse (18) d'où arrivent les objets à sélectionner, y compris les fruits et légumes, et qui est adaptée pour être déplacée à une vitesse qui peut être réglée par des moyens de contrôle de la vitesse ;
- une deuxième bande transporteuse (20) vers laquelle arrivent les fruits et légumes sélectionnés ;
- un groupe de reconnaissance (12) adapté pour reconnaître les objets à expulser parmi tous les objets passant de la première bande transporteuse (18) à la seconde bande transporteuse (20);
- un dispositif d'éjection (14) adapté pour éjecter les objets qui ont été préalablement identifiés et sélectionnés par le groupe de reconnaissance (12) ;
**caractérisé par le fait que** le groupe de reconnaissance (12) comprend des moyens de reconnaissance appropriés pour identifier le niveau de remplissage de la première bande transporteuse (18), de manière à faire varier la vitesse de la première bande transporteuse (18) par l'intermédiaire de moyens de contrôle de la vitesse, afin que le niveau de remplissage mesuré soit égal à un niveau de remplissage idéal défini précédemment.

2. Machine de tri optoélectronique (10) selon la revendication précédente, dans laquelle les moyens de reconnaissance déterminent la quantité d'objets quittant la première bande transporteuse (18).

3. Machine de tri optoélectronique (10) selon l'une des revendications précédentes, dans laquelle les moyens de reconnaissance déterminent la taille des objets sortant de la première bande transporteuse (18).

4. Machine de tri optoélectronique (10) selon la revendication 1, dans laquelle les moyens de reconnaissance comprennent un dispositif de calcul qui calcule le rapport entre les espaces pleins et les espaces vides sur la première bande transporteuse (18).

5. Machine de tri optoélectronique (10) selon l'une des revendications précédentes, dans laquelle les premiers moyens de déplacement (24) sont compris pour déplacer le dispositif d'éjection (14).

6. Machine de tri optoélectronique (10) selon l'une des revendications précédentes, dans laquelle des seconds moyens de déplacement (22) sont prévus pour déplacer le groupe de reconnaissance (12).

7. Procédé de réglage de la vitesse correcte d'une première bande transporteuse (18) d'une machine de tri optoélectronique (10) pour machines de récolte de fruits et légumes, **caractérisé par** le fait de comprendre les étapes suivantes :
- déterminer le niveau de remplissage actuel de la première bande transporteuse (18);
- comparer le niveau de remplissage actuel de la première bande transporteuse (18) avec le niveau de remplissage idéal pour un fonctionnement efficace de la machine de récolte de légumes ;
- si le niveau de remplissage mesuré est inférieur au niveau de remplissage idéal, diminuer la vitesse de la première bande transporteuse (18) ;
- si le niveau de remplissage mesuré est supérieur au niveau de remplissage idéal, augmenter la vitesse de la première bande transporteuse (18).

8. Procédé selon la revendication précédente, dans lequel le niveau de remplissage de la première bande transporteuse (18) est mesuré par un groupe de reconnaissance (12) qui est adapté pour vérifier la conformité de chaque objet et qui détermine la quantité d'objets sortant de la première bande transporteuse (18) et dans lequel la quantité d'objets sur la première bande transporteuse (18) est comparée à une quantité de référence fixée précédemment.

9. Procédé selon la revendication 7, dans lequel le niveau de remplissage de la première bande transporteuse (18) est mesuré par un groupe de reconnaissance (12) qui détermine le rapport entre les espaces pleins et les espaces vides parmi les objets sortant de la première bande transporteuse (18) et dans lequel le rapport mesuré est comparé à un rapport de référence fixé précédemment.

10. Procédé selon l'une des revendications 7 à 9, dans lequel des premiers moyens de déplacement (24) d'un dispositif d'éjection (14) sont prévus pour expulser les légumes non conformes et/ou des seconds moyens de déplacement (22) du groupe de reconnaissance (12) sont prévus et dans lequel la position du dispositif d'éjection (14) et/ou la position du groupe de reconnaissance (12) sont modifiées en fonction de la vitesse de la première bande transporteuse (18) et donc de la vitesse de sortie des légumes de la première bande transporteuse (18).
